# EUROPEAN PATENT SPECIFICATION

(11) **EP 1 029 378 B1**
(45) Date of publication and mention of the grant of the patent: **16.08.2006**
(21) Application number: 98940975.0
(22) Date of filing: 19.08.1998
(51) Int. Cl.: H01M 2/34

(54) **CURRENT INTERRUPTER FOR ELECTROCHEMICAL CELLS**
STROMUNTERBRECHER FÜR ELEKTROCHEMISCHE ZELLEN
RUPTEUR DE COURANT DESTINE A DES PILES ELECTROCHIMIQUES

(30) Priority: 22.08.1997 US 916627; 06.11.1997 US 965248
(43) Date of publication of application: 23.08.2000
(73) Proprietor: DURACELL INC., Bethel, Connecticut 06801 (US)
(72) Inventor: POIRIER, Jeffrey, Bedford, MA 01730 (US); CHEESEMAN, Paul, Holliston, MA 01746 (US); MCDERMOTT, Michael, East Weymouth, MA 02189 (US); BLASI, Jane, A., Acton, MA 01720 (US); CANTAVE, Reynald, Bridgewater, MA 02324 (US); HEWES, Jeffrey, Holliston, MA 01746 (US); KOUZNETSOVA, Yelena, Sharon, MA 02067 (US); PATEL, Bhupendra, Mansfield, MA 02048 (US); KAPLAN, Alexander, Providence, RI 02906 (US); VU, Viet, Medway, MA 02053 (US); MCHUGH, William, T., Westwood, MA 02090 (US); FONTAINE, Lucien, P., Lincoln, RI 02865 (US); PINAULT, Robert, J., Warwick,RI 02886 (US)
(74) Representative: Ebner von Eschenbach, Jennifer
(86) International application number: PCT/US1998/017130
(87) International publication number: WO 1999/010940

(56) References cited:
- EP-A- 0 297 421
- EP-A- 0 757 394
- WO-A-95/00993
- WO-A-98/45888
- DE-A- 2 716 862
- US-A- 5 510 598
- PATENT ABSTRACTS OF JAPAN vol. 014, no. 278 (E-0941), 15 June 1990 -& JP 02 087935 A (ASAHI CHEM IND CO LTD), 28 March 1990
- PATENT ABSTRACTS OF JAPAN vol. 017, no. 683 (E-1477), 15 December 1993 -& JP 05 234614 A (NIPPON TELEGR & TELEPH CORP), 10 September 1993
- PATENT ABSTRACTS OF JAPAN vol. 014, no. 553 (E-1010), 7 December 1990 & JP 02 237437 A (ASAHI CHEM IND CO LTD), 20 September 1990

## Description

This invention relates to current interrupters for an electrochemical cell, which safely prevent current flow through the cell upon an excessive increase in the temperature or gas pressure therein.

Electrochemical cells, especially high energy density cells such as those in which lithium or lithium ion is an active material, are subject to leakage or rupture which, in turn, can cause damage to the device which is powered by the cell or to the surrounding environment. In the case of rechargeable cells, the rise in internal temperature of the cell can result from overcharging. Undesirable temperature increases are often accompanied by a corresponding increase in internal gas pressure. This is likely to occur in the event of an external short circuit condition. Also, the internal gas pressure can increase in the event that the cell is overdischarged. It is desirable that safety devices accompany the cell without unduly increasing the cost, size or mass of the cell.

Such cells, particularly rechargeable cells utilizing lithium or lithium ion as an active material, are subject to leakage or rupture caused by a rise in internal temperature of the cell which often is accompanied by a corresponding increase in pressure. This is likely to be caused by abusive conditions, such as overcharging or by a short circuit condition which may occur during overdischarging. It is also important that these cells be hermetically sealed to prevent the egress of electrolyte solvent and the ingress of moisture from the exterior environment.

As set forth above, if such a cell is overcharged, self-heating occurs. Charging at too rapid a rate or overcharging can lead to an increase in the temperature. Overcharging the cell may occur if the charging voltage or charging current becomes too high causing the cell to rapidly overheat, thus posing a safety concern. When the temperature exceeds a certain point, which varies depending upon the chemistry and structure of the cell, an undesirable and uncontrollable thermal runaway condition begins. In addition, because of the overheating, internal pressure builds up, and electrolyte may suddenly be expelled from the cell. It is preferable to initiate controlled venting before that takes place. PTC (positive thermal expansion coefficient devices) whose resistance increases with current passage therethrough have been used in attempt to prevent excessive current throughput through a rechargeable cell. However, such devices alone are inadequate in preventing a thermal runaway condition from occurring if the cell becomes overcharged, for example, if excessive charging voltage is employed.

Some rechargeable cells can be very thin, for example, thin prismatic cells, or small size cylindrical cells for cellular phones. It has been difficult to incorporate reliable current interrupt safety devices into such cells because of their small size. But the need for such safety devices is all the greater because of the proximity of the cell to the consumer during normal cellular phone operation.

Conventional cell designs employ an end cap fitting which is inserted into an open ended cylindrical casing after the cell anode and cathode active material and appropriate separator material and electrolyte have been inserted into the cylindrical case. The end cap is in electrical contact with one of the anode or cathode material and the exposed portion of the end cap forms one of the cell terminals. A portion of the cell casing forms the other terminal.

The present invention has one or several current interrupt assemblies integrated within a single cell and applied advantageously to primary or secondary (rechargeable) cells. The end cap assembly of the invention has particular application to rechargeable cells, for example, lithium-ion and rechargeable lithium cells and the like using liquid or polymer electrolyte or hybrid polymer/liquid electrolyte and nickel metal hydride, nickel cadmium, or other rechargeable cells. The end cap assembly of the invention overcomes the danger of the cell overheating and pressure building up in the cell during exposure to high temperatures, excessive or improper charging or discharging, or shorting of the cell.

In one aspect the invention is directed to a current interrupt mechanism for thin prismatic cells or small diameter cylindrical cells. A small thermally responsive current interrupt assembly is located within the cell. The current interrupt assembly is preferably a self-contained, sealed device which has the advantage that it may be separately manufactured and inserted in the cell as a separate unit during cell construction. A thermally responsive current interrupt mechanism within the self-contained assembly activates to interrupt and prevent current from flowing through the cell when the cell interior overheats to exceed a predetermined temperature. The current interrupt mechanism comprises a thermally responsive member, desirably a flexible disk preferably composed of a shape memory metal alloy having a curved surface. In normal cell operation the shape memory alloy disk preferably forms a portion of the electrical pathway between one of the cell electrodes and a terminal to which the electrode is connected. When the temperature within the cell reaches a predetermined value, the shape memory disk deflects to break the electrical pathway between said electrode and the terminal thereby shutting down the cell. A diode, preferably a Zener diode, is advantageously placed within the current interrupt assembly in proximity to the shape memory disk. The Zener diode is electrically connected in parallel to the cell terminals. If the cell is inadvertently overcharged, prolonged charging or charging at excessive voltage will cause heating of the diode which in turn causes the shape memory disk to deflect to break said electrical pathway thereby shutting down the cell.

In another aspect of the invention the current interrupt assembly is a self-contained unit comprising both a thermally responsive current interrupt mechanism and a pressure actuated current interrupt mechanism. The current interrupt assembly has an exposed end cap plate which functions as a terminal of the cell. When the assembly is applied to a cell and the cell is in normal operation the end cap plate is in electrical communication with a cell electrode (anode or cathode). The current interrupt mechanism comprises a thermally responsive flexible member composed of a shape memory metal alloy or a bimetal, desirably in the form of curved disk, which may be in physical communication with a flexible electrically conductive member. Physical communication between the thermally responsive member and flexible conductive member may be achieved by an electrically nonconductive moveable rod positioned between these two elements. In normal cell operation the flexible conductive member forms a portion of the electrical pathway between one of the cell electrodes and the end cap (terminal). When the temperature within the cell reaches a predetermined value, the thermally responsive member deflects causing the nonconductive moveable rod to push against the flexible conductive member in turn causing it to deflect and break the electrical pathway between said electrode and the terminal.

The assembly may include a diode, preferably a Zener diode, in proximity to the thermally responsive member. The Zener diode is connected in parallel with the cell terminals. If the cell is inadvertently overcharged, prolonged charging or charging at excessive voltage will cause heating of the diode which in turn causes the thermally responsive member to deflect to break said electrical pathway thereby shutting down the cell. The assembly desirably also includes a pressure actuated current interrupt mechanism which preferably includes a pressure actuated metal diaphragm. The diaphragm preferably forms a portion of the current interrupter assembly housing and deflects when pressure within the cell exceeds a predetermined level. The deflection of the diaphragm causes a break in the electrical pathway between a cell electrode and corresponding terminal thereby shutting down the cell.

In another aspect the cell may contain both of the above two types of self-contained current interrupt assemblies, namely one containing only a thermally responsive current interrupt mechanism and the other containing both a thermally responsive current interrupt mechanism and a pressure actuated current interrupt mechanism. This provides the cell with multiple independent current interrupt safety features. Such design may be used advantageously if the cell is of sufficient diameter to house both current interrupt assemblies, for example, a cell having a diameter or overall thickness between about 5 and 20 mm. In such embodiment the current interrupt assembly containing only the thermally responsive current interrupt mechanism may advantageously be located completely within the cell interior so that it is closest to the hottest part of the cell. A diode, preferably a Zener diode, may be included within one or both such self-contained current interrupt assemblies and electrically connected in parallel with the cell terminals.
Fig. 1 is a cut-away perspective view of an embodiment of the current interrupter assembly of the invention placed wholly within a prismatic cell.
Fig. 2 is a cross sectional view of the cell and current interrupter assembly shown in Figure 1.
Fig. 3 is an exploded perspective view of the components of the current interrupter assembly shown in Figures 1 and 2.
Fig. 4 is a perspective view of prismatic cell with another embodiment of the current interrupter assembly shown protruding from an end of the cell.
Fig. 5 is a perspective view of a cylindrical cell with the same embodiment of the current interrupter assembly shown in Figure 4.
Fig. 6 is a cross-sectional view of the current interrupter assembly shown in Figures 4 and 5.
Fig. 7 is an exploded perspective view of the current interrupter assembly shown in Figures 4, 5, and 6.
Fig. 8 is a vertical cross-sectional view of a cylindrical cell containing the current interrupter assembly embodiments shown in Figures 2 and 6.
Fig. 9 is a perspective view of an oval disk shaped configuration for the diode subassembly.
Fig. 10 is a perspective view of a rectangular disk shaped configuration for the diode subassembly.

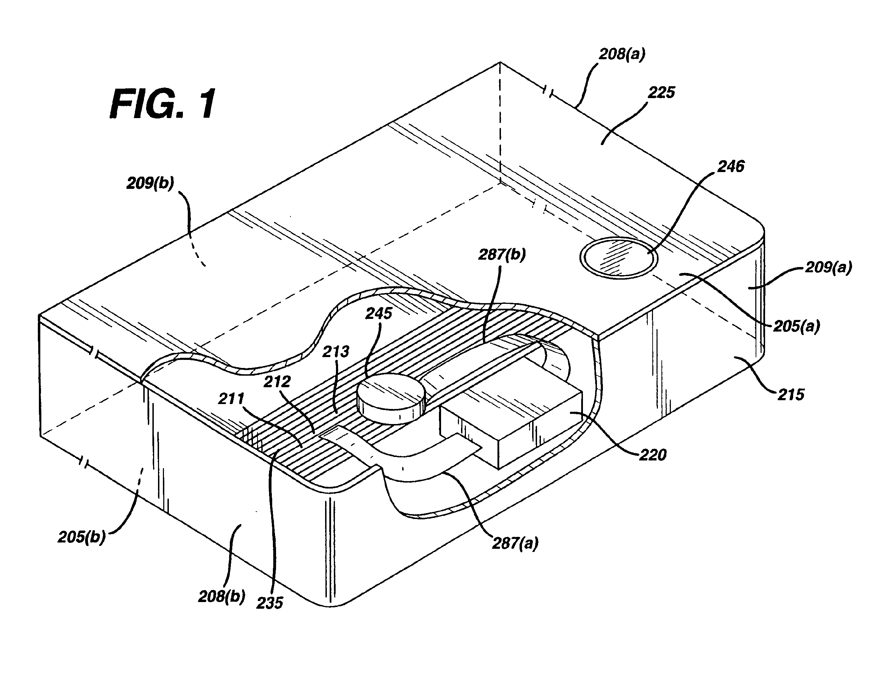

In a preferred embodiment the thermally responsive current interrupter assembly 220 of the invention may be located internally wholly within a cell 215 as shown in Figure 1. Cell 215 may be a prismatic cell having a parallelepiped shaped casing 225 as shown in Figure 1, but alternatively may be a thin diameter cylindrical cell. If cell 215 is a prismatic cell it typically has a small overall thickness between about 3 and 10 mm, typically the prismatic cell is very thin having an overall thickness between about 3 and 6 mm. If cell 215 is a small diameter cylindrical cell, the diameter may typically be between about 3 and 10 mm diameter. The current assembly 220 as described herein may be integrated into larger size cells, for example prismatic cells having a thickness between about 3 and 15 mm or cylindrical cell having a diameter between about 3 and 15 mm, but the assembly 220 has particular utility for small thickness prismatic or small diameter cylindrical cells. Cell 215 may be a primary or rechargeable cell such as a lithium ion cell, nickel metal hydride cell or nickel cadmium cell, but advantageously is a rechargeable cell such as a lithium ion cell. A lithium-ion rechargeable cell is characterized by the transfer of lithium ions from the negative electrode to the positive electrode upon cell discharge and from the positive electrode to the negative electrode upon cell charging. It may typically have a positive electrode of lithium cobalt oxide (LiₓCoO₂) or lithium nickel oxide (LiNiₓO₂) or cobalt substituted lithium nickel oxide (LiCOₓNi_{y}O₂) or lithium manganese oxide of spinel crystalline structure (LiₓMn₂O₄). The lithium-ion cell typically has a negative electrode employing carbon or tin oxide materials. The negative electrode constitutes the anode of the cell during discharge and the cathode during charging, and the positive electrode constitutes the cathode of the cell during discharge and the anode during charging. The electrolyte for such cells may comprise a lithium salt dissolved in a mixture of non-aqueous solvents. The salt may be LiPF₆ and the solvents may advantageously include dimethyl carbonate (DMC), ethylene carbonate (EC), propylene carbonate (PC) and mixtures thereof. In the specific embodiment shown in Figure 1 cell 215 is a prismatic lithium ion cell having a casing 225 formed of opposing flat body faces 205(a) and 205(b), flat side faces 208(a) and 208(b) and flat end faces 209(a) and 209(b). Positive terminal 245 and negative terminal 246 are exposed from the same side face 208(a) and are accessible for connection to a device to be powered. An electrode stack 235 is shown comprising a sheet of positive electrode material 211, a sheet of negative electrode material 213 with conventional porous separator material 212 therebetween. The stack 235 may be wound in conventional jelly roll fashion and the wound material then flattened so that it fits compactly within the cell.

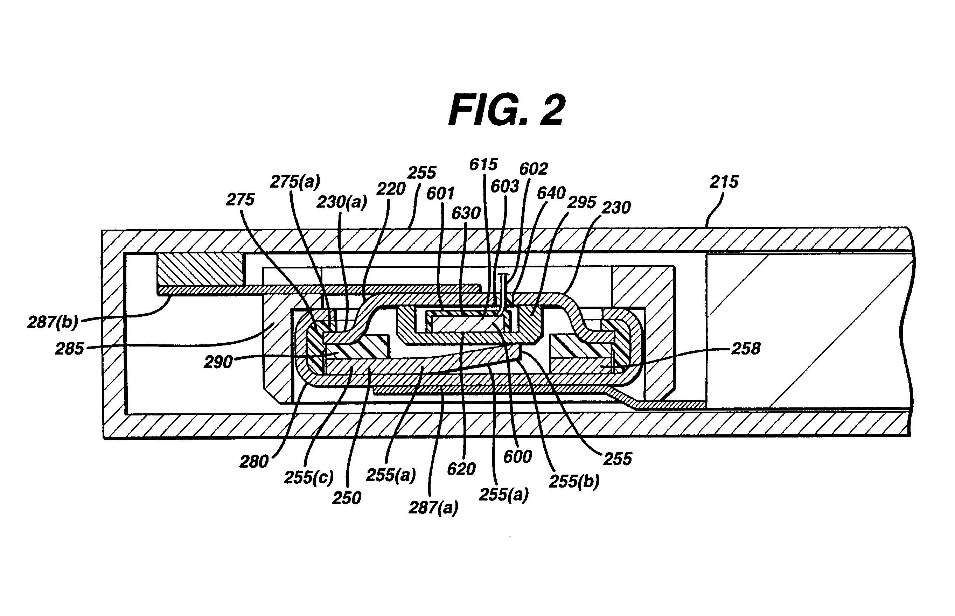

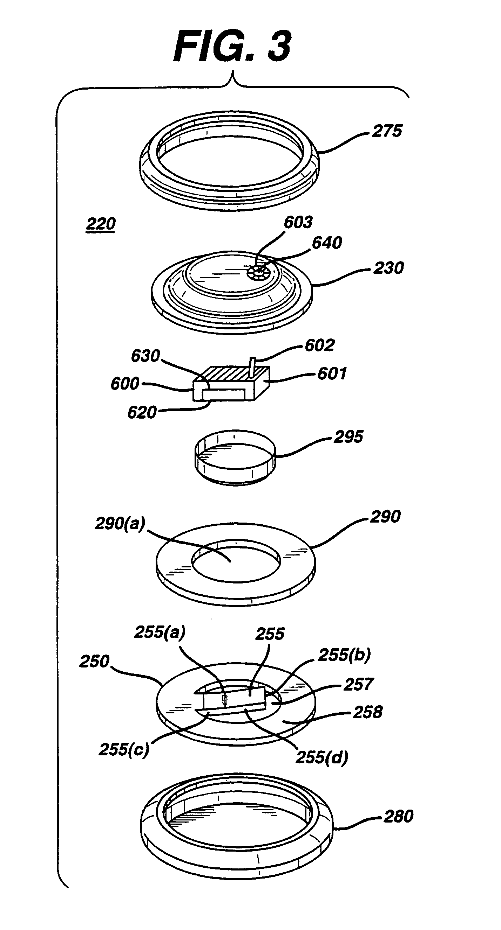

A thermally responsive current interrupter assembly 220 of the invention may be integrated into a lithium ion prismatic cell 215 as shown in Figure 1. In such embodiment the current interrupter assembly is placed wholly within the cell interior and is electrically connected at one end to the positive electrode 211 and at the other end to positive terminal 245. Thus, under normal operation there is an electrical pathway between the positive electrode 211 and the positive terminal 245. A preferred embodiment of current interrupter assembly 220 is shown in Figure 2. Assembly 220 is a self-contained, sealed unit comprising a metal casing 280, a metal end cap 230, a current interrupter disk 250, preferably formed of a shape memory alloy, and a metal contact plate 295 contacting the inside surface of cap 230. End cap 230 is concaved so that its surface bulges outwardly as shown in Figure 2. Casing 280 is in the form of a cup shaped circular structure having an open end and a slightly bulging body as shown in Figure 3. Assembly 220 has an insulating ring 290 between the peripheral edge of disk 250 and the peripheral edge 230(a) of end cap 230. Assembly 220 may also have a diode, preferably a Zener diode chip 600 placed therein in proximity to the current interrupter disk 250. Zener diode 600 may be located within contact plug 295. Preferably Zener diode 600 is of wafer shape having a positive face 620 which contacts the inside surface of contact plug 295 and a negative face 630 which is electrically connected to the cell's negative terminal 246. End cap 230 may have an aperture 640 therethrough. The aperture may be lined with electrical insulating gland 603 which may be composed of conventional polypropylene or glass to metal sealing material. A conductive connector or lead 602 may extend from the Zener diode's negative face 630 through insulated aperture 640 for connection to the cell's negative terminal 246. Connector 602 may be of nickel or copper which is welded to negative face 630. The diode 600 may be provided with an insulating coating 601 composed of polyester or polyimide material applied to cover and insulate the exposed negative face 630. Thus, insulating coating 601 protects the negative face 630 from contact with contact plug 295 or assembly end cap 235 both of which are positive. The diode 600 with insulating coating 601 forms a diode subassembly having a thickness of between about 0.25 and 0.35 mm.

Zener diode chip 600 is a two terminal semiconductor junction device which may be in wafer form, for example, as a thin oval or polygonal wafer disk, preferably a rectangular or square wafer disc as shown in Fig. 3 or in cylindrical form. In the wafer form the Zener diode has a metallized positive terminal face (cathode) 620, a metallized negative terminal face (anode) 630, and a core semiconductor junction layer 615 between the two terminal faces. Junction 615 is typically protected with silicon dioxide. In the cylindrical Zener diode, the semiconductor junction lies within the cylinder. The outside surface of the cylinder forms one of the terminal faces and an end of the cylinder forms the opposite terminal. The Zener diode when connected to an electrochemical cell or other D.C. (direct current) power supply exhibits a characteristic current vs. voltage profile. Zener diodes can be preselected by Zener voltage V* (breakdown voltage) and power consumption (watts) at the Zener voltage. If the voltage, V, across the diode terminals is varied, the resistance through the diode decreases gradually up to the Zener voltage, V*. As voltage approaches and crosses over the Zener voltage, V*, resistance through the diode drops dramatically. This means that the resistance through the diode becomes very small and current, I, through the diode becomes very high as voltage increases much beyond the Zener voltage, V*. As current passes through the diode it is subjected to I²R heating with its equilibrium surface temperature a function of the watt density (power consumption per unit of surface area.)

While the preferred diode 600 for the end cap assembly of the invention is a Zener diode, other diodes could be used in its place. For example, the Zener diode could be replaced with a Schottky diode or power rectifier diode with suitable power dissipation and low voltage drain. Such diodes also exhibit the desirable characteristic of decreasing resistance as applied voltage increases and therefore could be used as a heating element in place of the Zener diode to cause current interrupter disk 250 to deflect in the event that the cell is subjected to an overcharge condition. However, such diodes are less desirable than the Zener diode since they do not exhibit a drastic drop in resistance when a specific voltage, e.g. a preselected Zener voltage, is reached.

It has been determined that proper selection of the diode 600 diode and placement of the diode within the end cap assembly 220 in proximity to the thermally responsive current interrupter disk 250 offers added safety in the event that the cell is exposed to overcharged situation resulting from excessive charging voltage or high charging current. In such case the diode quickly becomes hot due to I²R heating in turn causes the current interrupter disk 250 to deflect to break the electrical pathway within assembly 220 and shut down the cell. It has been determined that including a Zener diode quickens the shut down response during such overcharge situations since the current interrupt disk is exposed to and senses an additional heat source, namely the diode. The Zener diode is advantageously selected so that its Zener voltage is well beyond the normal operating voltage of the cell, but at the same time represents a voltage threshold at which it is desirable to trigger the current interrupter disk 250 to shut down the cell. The Zener diode is also selected so that the current carried at the Zener voltage is dissipated as heat reaching a temperature sufficient to cause a deflection of the current interrupter disk 250. Preferably the diode is also selected so that it will cause only negligible drain of the cell when the cell is not in use. For lithium ion cells it is desirable to select the Zener diode so that it drains less than about 100 microamp, preferably about 20 microamp, of current at 3.0 volts.

A lithium ion cell operates in a voltage range typically between about 3 and 4 volts. Therefore, selection of a proper Zener diode for lithium ion cell for use in end cap assembly 220 and other current interrupt end cap assemblies hereinafter described may desirably have a Zener voltage under about 5.0 volts, preferably between about 4.7 and 5.0 volts and a wattage of between about 100 and 500 microwatts so that the current through the diode will be low within the cell operating voltage range between about 3 and 4 volts. That is, the diode should be selected so that it will not generate enough heat under normal charging conditions to cause the current interrupt disk 250 to deflect and as well will not drain significant current from the cell to significantly deplete the cell when the cell is not in use. A preferred Zener diode 600 for application to end cap assembly 220 used in conjunction with a lithium ion cell may be Zener diode (500 microwatt) wafer chip type no. CDC 5230 having a Zener voltage of 4.7 volts supplied by Compensated Devices Inc. of Melrose, Mass. An alternative Zener diode 600 for application to end cap assembly 220 used with a lithium ion cell may be a 300 micro Watt wafer chip type no. CDC 4688 having a Zener voltage of 4.7 volts. Such chips have a width of about 0.6 mm and thickness of about 0.25 mm.

The use of end cap assembly 220 with or without inclusion of Zener diode 600 does not preclude adding a conventional PTC (positive thermal expansion coefficient) device within the electrical pathway between the cell's positive electrode and the positive terminal 245. Such PTC device if added could be placed within end cap assembly 220 or external to it. However, the above described embodiment for end cap assembly 220 with inclusion of Zener diode 600 does not require the PTC device. PTC devices exhibit increasing resistance as current therethrough increases. The resistance of the PTC device, however, does not increase high enough to prevent all current from passing therethrough. The PTC device therefore does not by itself afford the same degree of protection as the above described preferred embodiment for end cap assembly 220, particularly when the cell is subjected to overcharging by use of excessive charging voltage or prolonged charging. Additionally, the thermal current interrupter disk 250 is also capable of reacting to excess charge or discharge current obviating the need to include a PTC device to afford protection for such situations.

Preferred structure for each of the assembly 220 components is shown in Figure 3. Current interrupter disk 250 has a thickness which is small compared to its diameter or average width and is preferably circular or cylindrical but may also be of other shapes, for example, it may be oval, or elliptical or in the form of a thin parallelepiped or thin elongated slab or plate with one or more pairs of opposing edges which may not be parallel. Such structures preferably have a thickness which is less than about 30% of its length and also less than about 30% of its average width. Thus the term disk, as use herein and specifically in connection with thermally responsive members 250, 350, and 352, is intended to be construed to include such other shapes. In the case of an oval or elliptical shaped disk, the term average width shall refer to the smallest diameter of its major face.

The thickness of disk 250 is desirably less than 1 mm, preferably between about 0.05 and 0.5 mm. A preferred embodiment of current interrupter disk 250 shown best in Figure 3 has an outer edge 258 and hollow central portion 257. A flexible, resilient portion 255 protrudes inwardly into the hollow portion 257 from peripheral edge 258. The flexible portion 255 is preformed advantageously with a slight upward bend 255(a) in its surface as shown in Figure 3 so that its end 255(b) rests in a first position against contact plate 295 to complete the electrical pathway between positive electrode 211 and positive terminal 245. During normal operation current passes from positive electrode 211 to connector tab 287(a) to casing 280 to current interrupter disk 250 and flexible portion 255 to contact plug 295 to assembly end cap 230 to connector tab 287(b) and then to positive terminal 245. As may be seen from Figure 1, current interrupter disk 250 is oriented within the assembly so that current passes through the thickness of disk 250 and therefore the thickness of flexible portion 255, to minimize resistance. When the temperature within cell 215 exceeds a predetermined value, end 255(b) deflects downward to a second position to break contact with contact plate 295 thereby breaking the electrical pathway between electrode 211 and terminal 245 to shut down the cell.

With reference to Figure 3 current interrupter assembly 220 is designed to be readily constructed by inserting current interrupter disk 250 into open ended casing 280 so that it rests on the bottom surface of the casing. The positive face 620 of Zener diode 600 is connected to the inside surface of contact plug 295. Insulating ring 290 is then inserted over disk 250 and metal contact plug 295 which is in the form of a solid disk shaped plug is inserted through the aperture 290(a) in insulating ring until it rests on protruding resilient member 255, preferably composed of a shape memory alloy. Insulating grommet 275 is inserted over end cap 230 and these two pieces are then placed over metal contact plug 295 sot that the inside surface of end cap 230 contacts the top surface of contact plug 295. The peripheral edge of casing 280 and peripheral edge of insulating grommet 275 are then crimped over the peripheral edge 230(a) of end cap 230. Radial pressure is applied during crimping so that peripheral edge 230(a) of end cap 230 bites into the inside surface of peripheral edge 275(a) of insulating grommet 275 to form a tight seal between end cap 230 and casing 280.

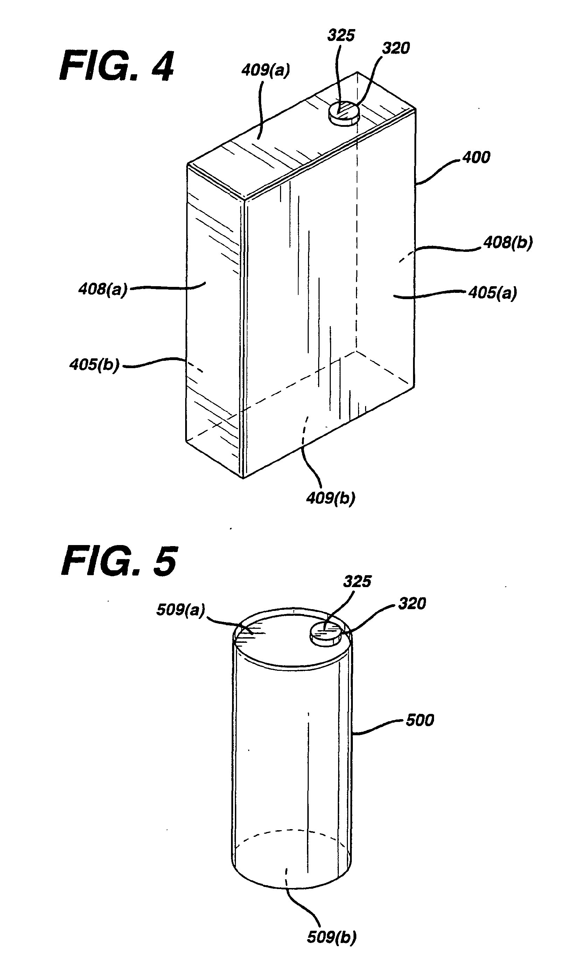

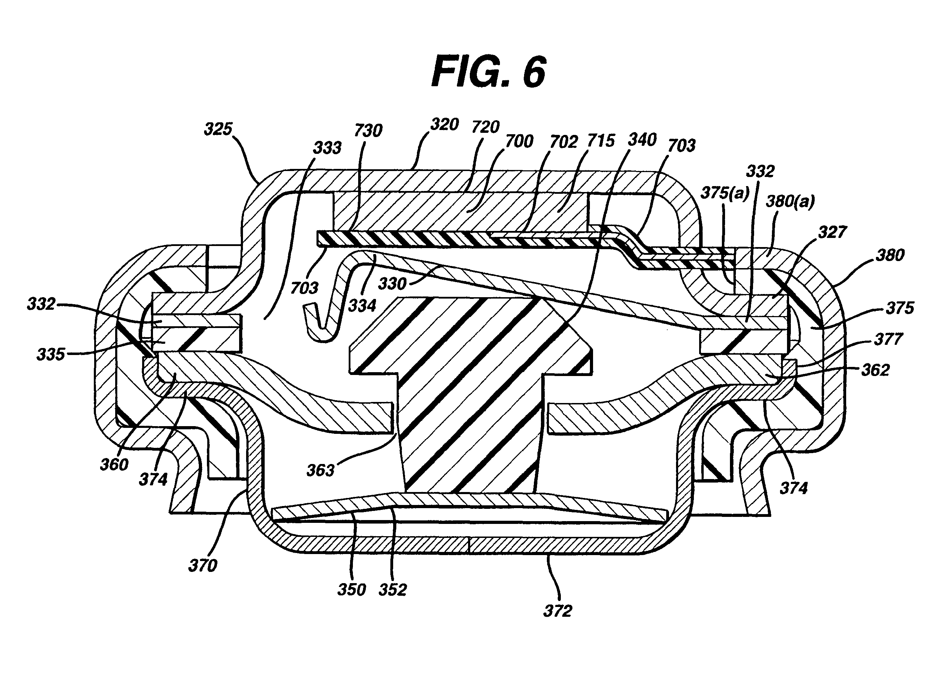

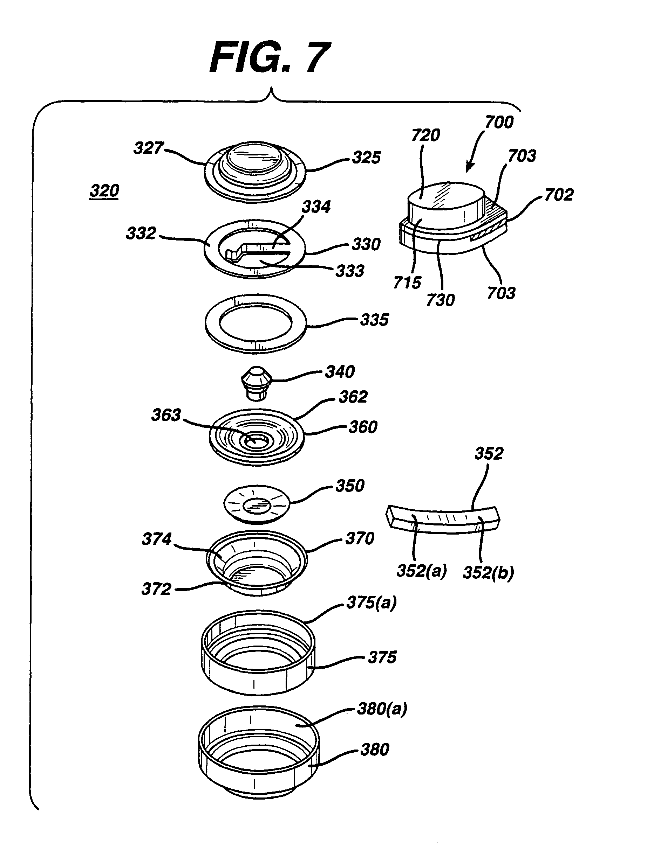

Another embodiment of the thermal current interrupter assembly, namely, assembly 320 is shown in Figures 6 and 7. This embodiment of the current interrupter is designed to protrude from an end of a prismatic cell as shown in Figure 4 or from an end of a cylindrical cell as shown in Figure 5. In such embodiment the overall thickness of the prismatic cell is advantageously at least about 6 mm, typically between about 6 and 20 mm which is a large enough thickness to accommodate assembly 320. If the cell is cylindrical, as shown in Figure 5, it desirably has a diameter at least as great as AAA size cells, in order to accommodate assembly 320. Thus, assembly 320 may conveniently be applied to protrude from the end of AAA, AA, A, C or D size cylindrical cells or, for example, cells having a diameter between about 5 and 20 mm. When used in this manner the protruding portion of assembly 320, namely, end cap 325 may conveniently form one of the cell terminals.

Current interrupter assembly 320 may have an end cap 325 desirably in the shape of an inverted cup which forms the upper portion of assembly 320 and a cup shaped body 370 which form the lower portion of the assembly as shown in Figure 6. End cap 325 and body 370 are formed of electrically conductive material. The base 372 of cup shaped body 370 preferably forms a pressure actuated diaphragm which is designed to deflect upwards (towards end cap 325) when pressure within the cell exceeds a predetermined value. A flexible heat responsive member 350 or 352 advantageously composed of a shape memory alloy or bimetal is located within the bottom portion of cup 370 and in proximity to pressure diaphragm 372. The heat responsive member may desirably be in the form of a disk, such as disk 350 or 352, having a curved surface as shown in Figure 7. Either structure may be used when a shape memory alloy or bimetal composition is employed, however, the elongated slab or parallelepiped structure 352 is preferred when a shape memory alloy is employed and the circular disk 350 structure is preferred when a bimetal composition is employed. Desirably disk 350 (or disk 352) is positioned within assembly 320 so that it lies substantially in a plane parallel to the surface of end cap 325. An electrically insulating rod or plug 340 may rest on the top surface of flexible heat responsive member 350. Assembly 320 desirably includes a metal support ring 360 which may be conveniently located onto ledge 374 of body 370. Assembly 320 desirably includes a flexible electrically conductive metallic disk 330 which comprises a flexible, resilient member 334 extending into the hollow portion 333 of disk 330 from the peripheral edge 332 thereof. An insulating ring 335 is placed between peripheral edge 332 of disk 330 and edge 362 of metal support ring 360. Flexible conductive disk 330 is sandwiched between peripheral edge 327 of end cap 325 and insulating ring 335. An insulating grommet 375 surrounds peripheral edge 327 of end cap 325 and the peripheral edge 377 of cup shaped lower body 370, and grommet 375 also surrounds disk 330 and insulating ring 335. A casing 380 in turn surrounds insulating grommet 375.

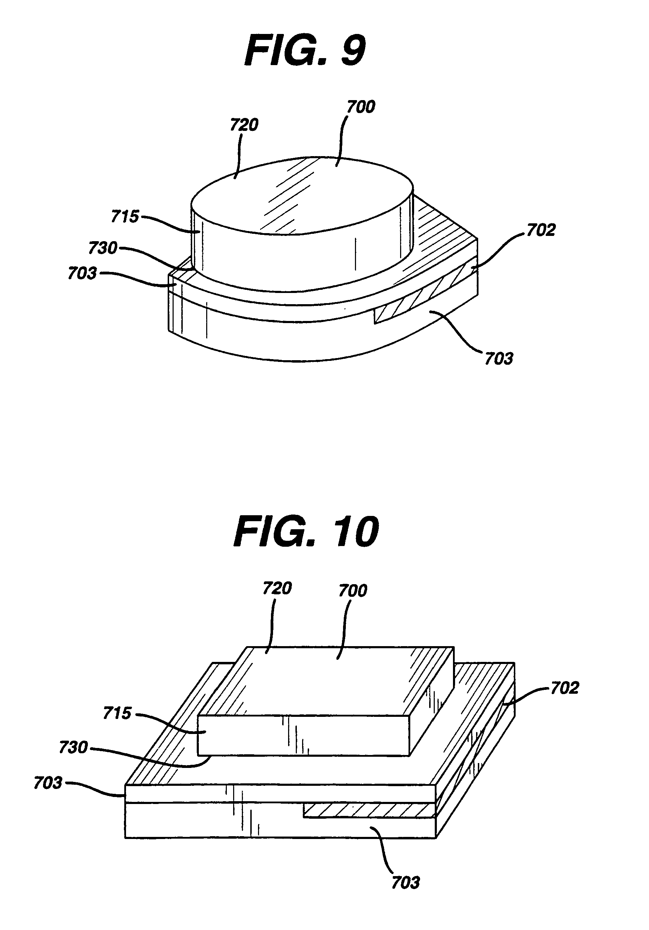

Current interrupt assembly 320 may include a diode disk 700 which may be in wafer form, for example, as a thin oval (Fig. 9) or polygonal wafer disk. Preferably diode 700 is in the form of a rectangular or square wafer as shown in Figure 10. Diode 700 is preferably a Zener diode, but other diodes, for example a Schottky diode or power rectification diodes with suitable power dissipation and low voltage drain could also be used. The positive metallic face 720 of the diode is connected to end cap 325 (Fig. 6) by attaching it thereto by conductive solder. A conductive lead 702 which may be in the form of a metallic wire or tab is provided extending from the negative face 730 of the diode. Lead 702 may be electrically connected to assembly casing 380 which in turn is electrically connected to the cell's negative terminal by welding it to the cell's casing. Electrical insulation 703 is provided over and under negative lead 702 to protect it from contact with end cap 325 or any of the internal metallic components within assembly 320 which are positive. Insulation 703 may be in the form of a film of polyester or polyimide material. Alternatively, insulation 703 may be polyvinyl chloride. Similarly, the exposed metallic negative face 730 of the diode is covered with insulating material such as with an insulating film of polyester or polyimide material to prevent contact between negative face 730 of the diode and metallic components within assembly 320 which are positive. Diode 700 is preferably a Zener diode which has a Zener voltage under about 5.0 volts, preferably between about 4.7 and 5.0 volts and a wattage of between about 100 and 500 microwatts for use in end cap assembly 320 and applied to lithium ion cells. Such diodes impose negligible drain on the cell. A preferred Zener diode 700 for application to end cap assembly 320 used in conjunction with a lithium ion cell may be Zener diode (500 microwatt) wafer chip type no. CDC5230 having a Zener voltage of 4.7 volts available from Compensated Devices Inc. of Melrose, Mass. The Zener diode 700 together with conductive lead 702 and insulation 703 forms a diode assembly having a thickness between about 0.25 and 0.35 mm.

The diode 600 or 700 in the preferred embodiments for end cap assemblies described herein are permanently electrically connected in parallel with the terminals of the cell. In the above described preferred embodiments the diode 600 or 700 and current interrupter 250 or 350 are both electrically connected to the cell's positive terminal. Thus, when the current interrupter 250 or 350 activates, the electrical pathway between the positive terminal and positive electrode is broken thereby simultaneously shutting down the cell and deactivating the diode. Alternative circuit designs for inclusion of the diode are also possible. Other resistance, for example resistors, may be included in the circuit between one or both Zener diode terminals and the connection of said Zener terminals with a corresponding cell terminal. Also, the diode, e,g, diode 700 (Fig. 6), could be connected in parallel with the cell terminals and the current interrupter resilient arm 330 could be connected in series with the diode, for example, if the positive face 720 of diode 700 were connected to metal support plate 360 (Fig. 6) instead of end cap 320. In such embodiment the diode does not deactivate when current interrupt member 350 and resilient arm 330 deflect. Accordingly, the term parallel electrical connection of the diode as used herein and in the claims is not intended to exclude the possibility of insertion of additional resistors or a conductive portion of the thermally responsive current interrupter, e.g., resilient arm 330, in the circuit leg between a diode terminal and the connection of that terminal with a cell terminal of corresponding polarity. The diodes selected as above described impose negligible drain on the cell. To eliminate entirely any idle drain on the cell, one of the diode terminals can be permanently connected to a corresponding cell terminal and the other of its terminals connectable to the corresponding cell terminal by a switch which is turned on when the cell is inserted into the charging device or the device being powered.

The use of end cap assembly 320 with or without inclusion of Zener diode 700 does not preclude adding a conventional PTC (positive thermal expansion coefficient) within the electrical pathway between the positive electrode 211 and the positive terminal 325. Such PTC device if added would desirably be placed within the cell and outside of end cap assembly 320. However, the above described embodiment for end cap assembly 320 with inclusion of Zener diode 700 affords greater protection than use of a PTC device alone, particularly when the cell is subjected to excessive charging voltage.

With reference to Figure 7 current interrupt assembly 320 may be constructed by first inserting insulating grommet 375 into casing 380 so that the outer surface of the grommet contacts the inside wall of casing 380. Then a subassembly is constructed by inserting thermally responsive member 350 or 352 into cup shaped body 370, then inserting metal support ring 360 onto ledge 374 of cup shaped body 370. The plastic movable rod 340 is inserted through central aperture 363 of support ring 360 so that it comes to rest on member 350. Insulating ring 335 is placed over support ring 360 in contact with its peripheral edge 362. Disk 330 is then placed over insulating ring 335 so that the peripheral edge 332 of disk 330 rests on insulating ring 335. The positive face 720 of Zener diode 700 is connected to the inside surface of end cap 325. End cap 325 is then placed over disk 330 so that the peripheral edge 327 of end cap 325 rests on the peripheral edge 332 of disk 330. The subassembly is then inserted into the casing 380 with insulating grommet 375 contained therein. The end 380(a) of casing 380 and end 375(a) of grommet 375 is then crimped over peripheral edge 327 of end cap 325 so that the subassembly and its components is held tightly and permanently in place and sealed by grommet 375 and surrounding casing 380.

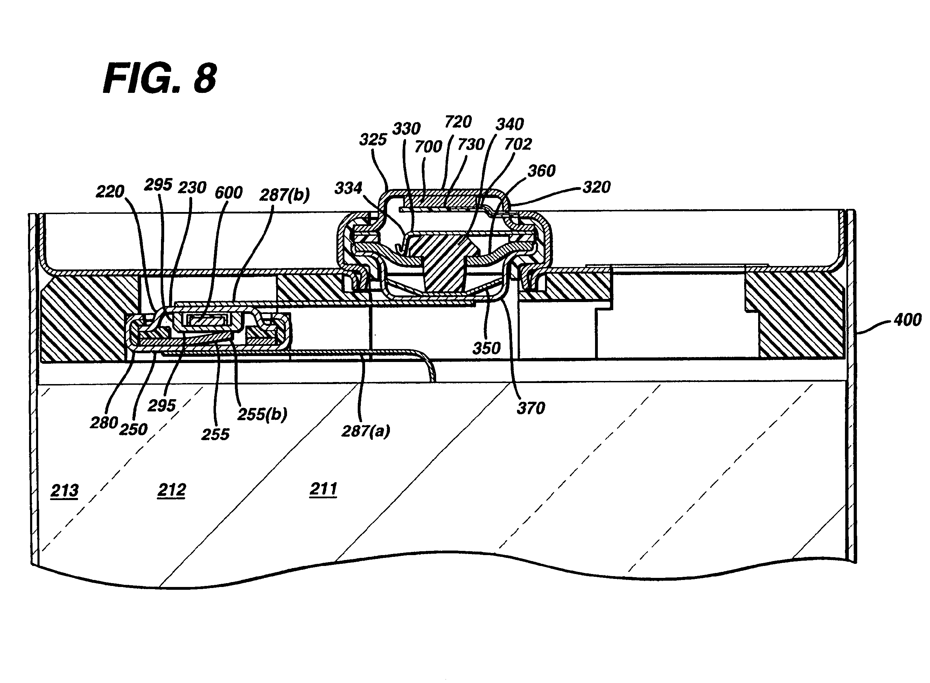

Assembly 320 may be inserted into a rechargeable cylindrical cell 400, for example a lithium ion cylindrical cell, as shown in Figure 8. End cap 325 of assembly 320 protrudes from an end of the cell and forms one of the cell terminals, typically the positive terminal. Similarly, assembly 320 may be inserted into a rechargeable prismatic cell, for example a lithium ion prismatic cell 500 shown in Figure 4. In such application end cap 325 protrudes form an end of the cell and forms one of the cell terminals, typically the positive terminal. In either case whether a cylindrical or prismatic cell is employed, the cell may optionally also include an additional current interrupter assembly, namely, the current interrupter assembly 220 above described. Having two separately housed, self contained current interrupter assemblies provides the cell with two thermally responsive current interrupt systems which self activate independently of one another.

A cell 400 with both current interrupt assemblies 220 and 320 included therein is shown in Figure 8. Both current interrupt assemblies 220 and 320 shown in Figure 8 are in the "on" position that is, in the position allowing current to flow normally from electrode 211 to terminal end cap 325. When the cell 400 is in such operation mode there is an electrical pathway between one of the cell electrodes, e.g., electrode 211 and cell terminal 325. In normal operation current flows from electrode 211 to connecting tab 287(a), to casing 280 of assembly 220, to contact plug 295, to end cap 230, and then to connector tab 287(b). Current flows from connector tab 287(b) to the lower body 370 of assembly 320. Current then flows from body 370 to support ring 360, to resilient arm 334 of disk 330, and then from disk 330 to terminal end cap 325. If the cell's internal temperature should reach a predetermined value, thermally responsive resilient member 255 flexes downwardly thereby breaking electrical connection between member 255 and contact plug 295. This has the effect of severing the electrical pathway between electrode 211 and terminal end cap 325 to shut down the cell. Also, if the cell's internal temperature reaches another predetermined value thermally responsive member 350 (or 352) of assembly 320 flexes upwardly to the position shown in Figure 6. This upward movement of member 350 causes plastic rod 340 to move upwardly against flexible resilient arm 334 of disk 330. This causes resilient arm 334 to break contact with support ring 360 thereby severing the electrical pathway between electrode 211 and terminal end cap 325. If the cell's internal temperature rises very quickly both heat responsive member 255 of assembly 220 and heat responsive member 350 (or 352) of assembly 320 will activate simultaneously causing the electrical pathway between electrode 211 and terminal end cap 325 to spontaneously break in two places. This assures an immediate shut down of the cell and provides added safety that the cell will shut down in the event that one of the two heat responsive members malfunctions.

Alternatively, if gas pressure within the cell builds up to exceed a predetermined value diaphragm 372 of assembly 320 will flex upwardly causing plastic rod 340 to move upwardly against resilient arm 334 causing resilient arm 334 to break contact with support ring 360. This in turn has the effect of breaking the electrical pathway between electrode 211 and terminal end cap 325 thereby shutting down the cell. Diaphragm 372 is solely responsive to the cell's internal pressure and, as such, actuates independently of the cell's internal temperature. Thus, pressure actuated diaphragm 372 assures that the cell will shut down if the gas pressure within the cell reaches a predetermined value irrespective of the cell's temperature.

In the current interrupt assembly embodiment shown in Figures 2 and 3 the thermally responsive disk 250 with inwardly extending resilient member 255 or disk 350 or disk 352 shown in Figures 6 and 7 are desirably composed of a shape memory alloy. The shape memory alloy may be selected from known memory alloy groups, for example, nickel-titanium (Ni-Ti), copper-zinc-aluminum (Cu-Zn-Al), and copper-aluminum-nickel (Cu-Al-Ni). However, it has been determined that the most desirable alloy for shape memory alloy disk 250 or disks 350 or 352 is a nickel-titanium alloy. A preferred nickel titanium memory alloy is available under the trade designation NITINOL alloy from Special Metals Corporation. Resilient member 255 of disk 250 or disks 350 or 352 may be of resettable memory alloy, that is, one that deforms when heated but returns to its original shape upon cooling to ambient temperature without application of external force. However, it is desirable that the shape memory alloy member not be resettable at ambient temperature, that is, it irreversibly deforms when heated to its activation temperature. This assures that the cell will not again become operational once conditions within the cell have caused excessive internal heating. Thus, disks 250, 359 or 352 are preferably fabricated using NITINOL alloy such that it is not resettable once it is activated. The preferred memory disk 250 may conveniently be fabricated as a single piece of NITINOL alloy having a circular peripheral edge 258 from which protrudes inwardly a flexible member 255. The flexible member 255 may conveniently be of rectangular shape fabricated with an upwardly bent outer leg 255(d) separated from inner leg 255(c) by bend line 255(a) (Figs. 2 and 3). Resilient member 255 may desirably be between about 2 and 5 mm wide and between 3 and 8 mm long and of thickness between about 0.05 and 0.5 mm. Leg 255(d) flexes downwardly along bend line 255(a) when temperature between about 60°C. and 120°C. causing a break in contact between member 255 and contact plug 295. Disk 250 may desirably have a diameter between about 5 and 15 mm.

In order to achieve such activation effect it has been determined that the thickness of the memory disk 250 and resilient member 255 may advantageously be in a range between about 0.05 and 0.5 mm with a surface area such that the resistance of said member is less than about 5 milli-ohm. The above described shape for disk 250, namely a hollow disk having a circular peripheral edge from which protrudes inwardly a flexible portion 255 is desirable, since it allows for reduced thickness and good contact area to reduce the overall resistance of disk 250 as current passes through its thickness during normal cell operation. The shape memory member 255 desirably does not have a deformation strain of more than about 8 percent. The bend angle is desirably between about 10 and 30 degrees, that is, end 255(b) is bent upwardly at an angle of between about 10 and 30 degrees from the plane of disk. This allows memory member 255 to deflect away from contact plug 295 and flatten when the activation temperature is reached. In application to lithium ion cells the above described preferred design for the memory disk may result in its overall resistance being less than 5-milliohm which in turn allows a current drain of up to 5 amp under continuous cell operation.

In the current assembly embodiment shown in Figures 6 and 7 the thermally responsive member in the form of curved, circular, disk 350 or disk in the form of a thin curved elongated slab or parallelepiped 352 may advantageously be composed of a shape memory alloy as above described, preferably of NITINOL alloy. (If disk 352 is in the form of a thin elongated slab, it may be oval or have one or more pairs of opposing edges which are not parallel.) Disk 350 or 352 is preferably fabricated to irreversibly deform when exposed to a predetermined temperature desirably between about 60°C. and 120°C. If the cell internal temperature exceeds a predetermined value the disk or slab curvature reverses or flattens causing plastic rod 340 to push against resilient arm 334 of disk 330. This in turn causes a break in electrical contact between disk 330 and metal support ring 360 as above described to interrupt current flow. Thermally responsive disk 350 or 352 may alternatively be of a bimetallic construction, that is, comprising two layers of dissimilar metals having different coefficient of thermal expansion. If bimetallic construction is employed, the top layer of bimetallic disk 350 or slab 352 (the layer closest to end cap 325) may be composed of a high thermal expansion metal, preferably nickel-chromium alloy and the underlying or bottom layer may be composed of a low thermal expansion metal, preferably nickel-iron alloy. Another suitable bimetallic composition is nickel and titanium. In such embodiment disk 350 (or disk 352) will activate when the cell temperature rises to at least 60°C. and typically can activate at a cell temperature between about 60°C. and 120°C. It is also possible to choose the high and low thermal expansion metal layers such that the disk 350 or 352 will not reset except at a temperature below -20°C. which in most applications makes the device a single action thermostatic device.

With reference to current interrupter assembly 220 (Figs. 2 and 3) casing 280 may be formed of aluminum, stainless steel or titanium for added strength and corrosion resistance. Casing 280 desirably has a wall thickness of between about 0.1 mm and 0.5 mm. Casing 280 and therefore assembly 220 is preferably between about 3 and 15 mm in diameter, typically between about 3 and 8 mm in diameter, and has a depth of between about 1 and 10 mm, typically between about 1 and 3 mm. An assembly 220 with such overall dimensions can be inserted into very thin prismatic cells having overall thickness between about 3 and 6 mm without notably reducing cell capacity or impairing the current interrupter functionality.

Internal insulating ring 290 is desirably composed of a corrosion resistant thermoplastic material having relatively high compressive strength and temperature stability. A preferred material for insulating ring 290 is a liquid crystal polymer available under the tradename VECTRA polymer from the Celanese Co. or a polyester available under the tradename VALOX polymer from General Electric Plastics Company. Contact plug 295 is desirably formed from cold-rolled steel or stainless steel so that it may be readily welded to the undersurface of endcap 230. Contact plug 295 may be plated with a precious metal such as silver to lower its contact resistance. End cap 230 is desirably formed of stainless steel, aluminum or titanium to provide required combination of strength and corrosion resistance and has an overall diameter of between about 3 and 15 mm, preferably between about 4 and 8 mm and an overall depth of under about 1 mm, typically between about 0.1 and 1 mm. Insulating grommet 275 may desirably have a thickness of between about 0.1 and 0.5 mm and an overall diameter of between about 3 and 15 mm, preferably between about 4 and 8 mm. Grommet 275 may be formed of a durable yet resilient, corrosion resistant thermoplastic material, for example, a high density polypropylene, which is inert to electrolyte and has sufficient resiliency to provide a good seal between casing 280 and the assembly 220 internal components.

With reference to the current interrupter assembly 320 (Figs. 6 and 7) casing 380 may be formed of, stainless steel or nickel plated cold rolled steel for strength and corrosion resistance. Casing 380 desirably has a wall thickness of between about 0.1 mm and 0.5 mm. Casing 380 and therefore assembly 320 is preferably between about 4 and 15 mm in diameter or overall width, preferably between about 4 and 8 mm and has a depth of between about 1 and 10 mm, typically between about 3 and 6 mm. An assembly 320 with such overall dimensions can be inserted into prismatic cells having overall thickness between about 6 and 20 mm or cylindrical cells having a diameter between about 5 and 20 mm without notably reducing cell capacity or impairing the current interrupter functionality. End cap 325 typically has an overall diameter between about 4 and 15 mm and an overall depth of between about 0.1 and 1 mm. End cap 325 may be formed of stainless steel or nickel plated cold rolled steel to provide adequate strength and corrosion resistance. Flexible conductive disk 330 desirably has a diameter between about 4 and 15 mm and a thickness of between about 0.1 and 0.5 mm. It is desirably composed of a resilient metallic material having good electrical conductivity and strength such as a beryllium-copper alloy or spring steel which may be plated with a precious metal such as gold or silver to lower its contact resistance. Resilient arm 334 of disk 330 may desirably be of a rectangular shape having a width of about 2 and 5 mm, a length of between about 3 and 8 mm, and thickness of between about 0.1 and 0.5 mm.

Insulating ring 335 desirably composed of a corrosion resistant thermoplastic material having relatively high compressive strength and temperature stability. A preferred material for insulating ring 335 is a liquid crystal polymer available under the trade designation VECTRA polymer from the Celanese Co. or a polyester available under the designation VALOX polymer from General Electric Plastics Company. Moveable rod 340 may have a diameter or width between about 1 and 3 mm and a length between about 1 and 5 mm. Rod 340 is essentially electrically nonconductive (formed of material which has high resistivity) and should be thermally stable even when exposed to high temperatures, for example, 120°C. and higher. A preferred material for rod 340 is liquid crystal polymer available under the trade designation VECTRA polymer from the Celanese Co. Metal support ring 360 desirably has a diameter between about 4 and 15 mm, preferably between about 4 and 8 mm and a thickness between about 0.1 and 1 mm. Support ring 360 may be readily formed of stainless steel or cold rolled steel to provide adequate strength which material may be plated with a precious metal such as gold or silver to lower the contact resistance. The depth of cup shaped body 370 may desirably between about 1 and 3 mm. Pressure actuated diaphragm 372 which desirably forms the base of cup shaped body 370 may have a diameter between about 4 and 15 mm and wall thickness of between about 0.1 and 0.5 mm. Cup shaped body 370 and diaphragm 372 may be readily formed of aluminum which is readily and permanently deformed when exposed to an elevated pressure differential. Insulating grommet 375 may desirably have a thickness of between about 0.1 and 0.5 mm and an overall diameter of between about 4 and 15 mm. Grommet 375 may be formed of a durable yet resilient, corrosion resistant thermoplastic material, for example, a high density polypropylene, which is inert to electrolyte and has sufficient resiliency to provide a good seal between casing 380 and the assembly 320 internal components.

Although the invention has been described with reference to preferred embodiments, it should be understood that modifications of the described embodiments are possible without departing from the concept of the invention. Therefore, the invention is not intended to be limited to the specific embodiments but rather is defined by the claims and equivalents thereof.

## Claims

1. A current interrupter assembly (220) for an electrochemical cell, said assembly comprising a housing (280), a chamber within the housing, and an end cap (230) sealed from said housing, said assembly having an electrically conductive pathway therethrough between said housing and said end cap wherein said assembly is insertable in a cell to form a portion of the electrical conductive pathway between one of the cell electrodes and a corresponding cell terminal, wherein said assembly includes a thermally responsive means within said chamber for preventing current from flowing through said electrical pathway within said assembly, and said assembly further includes electrical resistance means in proximity to said thermally responsive means, said resistance means causing heating as current passes therethrough, said resistance means exhibiting decreasing resistance as voltage applied thereto increases, said thermally responsive means having a thermally responsive disk (250), wherein said disk is oriented within said assembly so
that current passes through the thickness of said disk during normal cell operation, wherein at least a portion of said disk deflects when the temperature within said assembly reaches a predetermined level causing a break in said electrical pathway through said assembly thereby causing the cell to cease operating.

2. A current interrupter assembly according to claim 1, wherein said thermally responsive disk comprises a shape memory alloy.

3. A current interrupter assembly according to claims 1 or 2, wherein said thermally responsive disk is bimetallic.

4. A current interrupter assembly according to anyone of the preceding claims, wherein said thermally responsive disk has an aperture therethrough and said disk has an outer edge with a flexible portion protruding into said aperture from a portion of the outer edge, wherein the outer edge contacts the surface of an insulating member within said end cap, wherein said flexible portion has a bendable surface in a first position, wherein when the cell temperature within said assembly reaches a predetermined level said bendable surface moves to a second position causing a break in said electrical pathway.

5. A current interrupter assembly according to anyone of the preceding claims, wherein said resistance means comprises a diode located within said housing, said diode having a positive and a negative terminal electrically connected in parallel to the positive and negative terminals, respectively, of an electrochemical cell.

6. A current interrupter assembly according to anyone of the preceding claims, wherein said resistance means comprises a diode subassembly comprising a Zener diode located within said housing, said Zener diode having a positive and a negative terminal electrically connected in parallel to the positive and negative terminals, respectively, of an electrochemical cell.

7. A current interrupter assembly according to claim 6, wherein a terminal of said Zener diode is electrically connected to said exposed end cap of said assembly wherein said connected terminal of the Zener diode is of same polarity as said exposed end cap.

8. A current interrupter assembly according to anyone of the preceding claims, where said assembly is self-contained structure.

9. A current interrupter assembly according to anyone of claims 6 to 8, wherein said diode subassembly further comprises a conductive member connected to one of the terminals of said diode, said conductive member extending from the diode and electrically connected to a cell terminal of like polarity.

10. A current interrupter assembly according to claim 9, wherein the body of said conductive member is surrounded by electrical insulation.

11. A current interrupter assembly according to claims 6 to 10, wherein the Zener diode has a wattage of between about 100 and 500 microwatts.

12. A current interrupter assembly according to claims 6 to 11, wherein the Zener diode has a Zener voltage of less than about 5 volts.

13. A current interrupter assembly according to claims 6 to 12, wherein said Zener diode is a wafer chip.

14. A current interrupter assembly according to claims 6 to 13, wherein said diode subassembly is in the form of a wafer having a polygonal or oval shape.

15. An electrochemical cell (215) having a positive (245) and a negative (246) terminal and a pair of positive (211) and negative (213) electrodes said cell including a current interrupter assembly (220) according to anyone of the preceding claims.

16. An electrochemical cell according to claim 15, wherein said assembly is a self contained unit located wholly within the internal volume of said cell and wherein said cell is a rechargeable cell, preferably prismatic, having an overall thickness between about 3 and 10 mm.

17. An electrochemical cell according to claim 15 or 16, wherein said assembly forms a portion of the electrical pathway between one of said electrodes and the corresponding cell terminal and wherein one of the housing and the end cap of said assembly is electrically connected to one of said cell electrodes and the other is electrically connected to a corresponding cell terminal.

## Patentansprüche

1. Stromunterbrechereinheit (220) für eine elektrochemische Zelle, wobei die genannte Einheit ein Gehäuse (280), eine Kammer innerhalb des Gehäuses und eine Endkappe (230) umfasst, die im Verhältnis zu dem genannten Gehäuse dicht verschlossen ist, wobei die genannte Einheit dort hindurch einen elektrisch leitfähigen Pfad zwischen dem genannten Gehäuse und der genannten Endkappe aufweist, wobei die genannte Einheit in eine Zelle eingeführt werden kann, so dass ein Teilstück des elektrisch leitfähigen Pfads zwischen einer der Zellenelektroden und einem entsprechenden Zellenanschluss gebildet wird, wobei die genannte Einheit eine thermisch ansprechende Einrichtung in der genannten Kammer aufweist, um es zu verhindern, dass Strom durch den genannten elektrischen Pfad innerhalb der genannten Einheit fließt, und wobei die genannte Einheit ferner eine elektrische Widerstandseinrichtung in der Nähe der genannten thermisch ansprechenden Einrichtung aufweist, wobei die genannte Widerstandseinrichtung eine Erwärmung bewirkt, wenn Strom dort hindurch verläuft, wobei die genannte Widerstandseinrichtung einen abnehmenden Widerstand aufweist, wenn die an die Einrichtung angelegte Spannung zunimmt, wobei die genannte thermisch ansprechende Einrichtung eine thermisch ansprechende Scheibe (250) aufweist, wobei die genannte Scheibe innerhalb der genannten Einheit so ausgerichtet ist, dass während dem normalen Zellenbetrieb Strom durch die Dicke der genannten Scheibe fließt, wobei zumindest ein Teilstück der genannten Scheibe abgelenkt wird, wenn die Temperatur innerhalb der genannten Einheit einen vorbestimmten Wert erreicht, der eine Unterbrechung in dem genannten elektrischen Pfad durch die genannte Einheit bewirkt, wodurch bewirkt wird, dass die Zelle den Betrieb einstellt.

2. Stromunterbrechereinheit nach Anspruch 1, wobei die genannte thermisch ansprechende Scheibe eine Gedächtnislegierung umfasst.

3. Stromunterbrechereinheit nach Anspruch 1 oder 2, wobei die genannte thermisch ansprechende Scheibe bimetallisch ist.

4. Stromunterbrechereinheit nach einem der vorstehenden Ansprüche, wobei die genannte thermisch ansprechende Scheibe eine dort hindurch verlaufende Öffnung aufweist, und wobei die genannte Scheibe eine Außenkante mit einem flexiblen Teilstück aufweist, das von einem Teilstück der Außenkante in die genannte Öffnung vorsteht, wobei die Außenkante die Oberfläche eines isolierenden Elements innerhalb der genannten Endkappe berührt, wobei das genannte flexible Teilstück eine biegbare Oberfläche an einer ersten Position aufweist, wobei sich die genannte biegbare Oberfläche, wenn die Zellentemperatur innerhalb der genannten Einheit einen vorbestimmten Wert erreicht, an eine zweite Position bewegt, wobei eine Unterbrechung in dem genannten elektrischen Pfad bewirkt.

5. Stromunterbrechereinheit nach einem der vorstehenden Ansprüche, wobei die genannte Widerstandseinrichtung eine Diode umfasst, die innerhalb des genannten Gehäuses angeordnet ist, wobei die genannte Diode einen positiven und einen negativen Anschluss aufweist, die elektrisch parallel mit den entsprechenden positiven und negativen Anschlüssen einer elektrochemischen Zelle verbunden sind.

6. Stromunterbrechereinheit nach einem der vorstehenden Ansprüche, wobei die genannte Widerstandseinrichtung eine Diodenteileinheit umfasst, die eine Zener-Diode umfasst, die innerhalb des genannten Gehäuses angeordnet ist, wobei die genannte Zener-Diode einen positiven und einen negativen Anschluss aufweist, die mit den entsprechenden positiven und negativen Anschlüssen einer elektrochemischen Zelle parallel verbunden sind.

7. Stromunterbrechereinheit nach Anspruch 6, wobei ein Anschluss der genannten Zener-Diode elektrisch mit der genannten frei liegenden Endkappe der genannten Einheit verbunden ist, wobei der genannte verbundene Anschluss der Zener-Diode die gleiche Polarität aufweist wie die genannte frei liegende Endkappe.

8. Stromunterbrechereinheit nach einem der vorstehenden Ansprüche, wobei die genannte Einheit eine unabhängige Struktur darstellt.

9. Stromunterbrechereinheit nach einem der Ansprüche 6 bis 8, wobei die genannte Diodenteileinheit ferner ein leitfähiges Element umfasst, das mit einem der Anschlüsse der genannten Diode verbunden ist, wobei sich das genannte leitfähige Element von der Diode erstreckt und elektrisch mit einem Zellenanschluss der gleichen Polarität verbunden ist.

10. Stromunterbrechereinheit nach Anspruch 9, wobei der Körper des genannten leitfähigen Elements von einer elektrischen Isolierung umgeben ist.

11. Stromunterbrechereinheit nach einem der Ansprüche 6 bis 10, wobei die Zener-Diode eine Wattleistung zwischen etwa 100 und 500 Mikrowatt aufweist.

12. Stromunterbrechereinheit nach einem der Ansprüche 6 bis 11, wobei die Zener-Diode eine Zener-Spannung von weniger als etwa fünf Volt aufweist.

13. Stromunterbrechereinheit nach einem der Ansprüche 6 bis 12, wobei die genannte Zener-Diode einen Halbleiterchip darstellt.

14. Stromunterbrechereinheit nach einem der Ansprüche 6 bis 13, wobei die genannte Teileinheit in Form einer Halbleiterscheibe mit einer polygonalen oder ovalen Form gegeben ist.

15. Elektrochemische Zelle (215) mit einem positiven (245) und einem negativen (246) Anschluss und mit einem Paar positiver (211) und negativer (213) Elektroden, wobei die genannte Zelle eine Stromunterbrechereinheit (220) gemäß einem der vorstehenden Ansprüche aufweist.

16. Elektrochemische Zelle nach Anspruch 15, wobei die genannte Einheit eine unabhängige Einheit darstellt, die vollständig innerhalb des Innenvolumens der genannten Zelle angeordnet ist, und wobei die genannte Zelle eine wiederaufladbare Zelle darstellt, die vorzugsweise prismatisch ist, mit einer Gesamtdicke zwischen etwa 3 und 10 mm.

17. Elektrochemische Zelle nach Anspruch 15 oder 16, wobei die genannte Einheit einen Teil des elektrischen Pfads zwischen einer der genannten Elektroden und dem entsprechenden Zellenanschluss bildet, und wobei das Gehäuse oder die Endkappe der genannten Einheit elektrisch mit einer der genannten Zellenelektroden verbunden ist, und wobei die andere elektrisch mit einem entsprechenden Zellenanschluss verbunden ist.

## Revendications

1. Ensemble d'interrupteur de courant (220) destiné à une pile électrochimique, ledit ensemble comprenant un boîtier (280), une chambre à l'intérieur du boîtier, et un couvercle d'extrémité (230) scellé depuis ledit boîtier, ledit ensemble comportant un chemin électriquement conducteur au travers de celui-ci entre ledit boîtier et ledit couvercle d'extrémité, où ledit ensemble peut être inséré dans une pile pour former une partie du chemin électriquement conducteur entre l'une des électrodes de la pile et une borne de pile correspondante, où ledit ensemble comprend un moyen thermiquement sensible à l'intérieur de ladite chambre, destiné à empêcher que le courant ne circule au travers dudit chemin électrique à l'intérieur dudit ensemble, et ledit ensemble comprend en outre un moyen de résistance électrique à proximité dudit moyen thermiquement sensible, ledit moyen de résistance provoquant un chauffage lorsque le courant passe au travers, ledit moyen de résistance présentant une résistance décroissante lorsque la tension appliquée à celui-ci augmente, ledit moyen thermiquement sensible comportant un disque thermiquement sensible (250), où ledit disque est orienté à l'intérieur dudit ensemble de sorte que le courant passe au travers de l'épaisseur dudit disque au cours du fonctionnement normal de la pile, où au moins une partie dudit disque fléchit lorsque la température à l'intérieur dudit ensemble atteint un niveau prédéterminé provoquant une rupture dans ledit chemin électrique au travers dudit ensemble en amenant ainsi la pile à cesser de fonctionner.

2. Ensemble d'interrupteur de courant selon la revendication 1, dans lequel ledit disque thermiquement sensible comprend un alliage à mémoire de forme.

3. Ensemble d'interrupteur de courant selon les revendications 1 ou 2, dans lequel ledit disque thermiquement sensible est bimétallique.

4. Ensemble d'interrupteur de courant selon l'une quelconque des revendications précédentes, dans lequel ledit disque thermiquement sensible comporte une ouverture au travers de celui-ci et ledit disque a un bord extérieur comportant une partie flexible dépassant dans ladite ouverture d'une partie du bord extérieur, où le bord extérieur est en contact avec la surface d'un élément isolant à l'intérieur dudit couvercle d'extrémité, où ladite partie flexible comporte une surface pouvant être courbée dans une première position, où lorsque la température de la pile à l'intérieur dudit ensemble atteint un niveau prédéterminé, ladite surface pouvant être courbée se déplace à une seconde position en provoquant une rupture dans ledit chemin électrique.

5. Ensemble d'interrupteur de courant selon l'une quelconque des revendications précédentes, dans lequel ledit moyen de résistance comprend une diode située à l'intérieur dudit boîtier, ladite diode ayant une borne positive et une borne négative électriquement reliées en parallèle aux bornes positive et négative, respectivement, d'une pile électrochimique.

6. Ensemble d'interrupteur de courant selon l'une quelconque des revendications précédentes, dans lequel ledit moyen de résistance comprend un sous-ensemble de diode comprenant une diode Zener située à l'intérieur dudit boîtier, ladite diode Zener ayant une borne positive et une borne négative reliées électriquement en parallèle aux bornes positive et négative, respectivement, d'une pile électrochimique.

7. Ensemble d'interrupteur de courant selon la revendication 6, dans lequel une borne de ladite diode Zener est électriquement reliée audit couvercle d'extrémité exposé dudit ensemble, où ladite borne reliée de la diode Zener est de la même polarité que ledit couvercle d'extrémité exposé.

8. Ensemble d'interrupteur de courant selon l'une quelconque des revendications précédentes, où ledit ensemble est une structure complète par elle-même.

9. Ensemble d'interrupteur de courant selon l'une quelconque des revendications 6 à 8, dans lequel ledit sous-ensemble de diode comprend en outre un élément conducteur relié à l'une des bornes de ladite diode, ledit élément conducteur s'étendant depuis la diode et étant électriquement relié à une borne de pile de polarité identique.

10. Ensemble d'interrupteur de courant selon la revendication 9, dans lequel le corps dudit élément conducteur est entouré par un isolant électrique.

11. Ensemble d'interrupteur de courant selon les revendications 6 à 10, dans lequel la diode Zener a une puissance entre environ 100 et 500 microwatts.

12. Ensemble d'interrupteur de courant selon les revendications 6 à 11, dans lequel la diode Zener a une tension Zener inférieure à environ 5 volts.

13. Ensemble d'interrupteur de courant selon les revendications 6 à 12, dans lequel ladite diode Zener est une puce de tranche.

14. Ensemble d'interrupteur de courant selon les revendications 6 à 13, dans lequel ledit sous-ensemble de diode se présente sous la forme d'une tranche ayant une forme polygonale ou ovale.

15. Pile électrochimique (215) comportant une borne positive (245) et une borne négative (246) et une paire d'électrodes positive (211) et négative (213), ladite pile comprenant un ensemble d'interrupteur de courant (220) selon l'une quelconque des revendications précédentes.

16. Pile électrochimique selon la revendication 15, dans laquelle ledit ensemble est une unité complète par elle-même située complètement à l'intérieur du volume interne de ladite pile, et où ladite pile est une pile rechargeable, de préférence prismatique, ayant une épaisseur globale entre environ 3 et 10 mm.

17. Pile électrochimique selon la revendication 15 ou 16, dans lequel ledit ensemble forme une partie du chemin électrique entre l'une desdites électrodes et la borne de pile correspondante, et où un premier du boîtier et du couvercle d'extrémité dudit ensemble est électriquement relié à l'une desdites électrodes de la pile et l'autre est électriquement relié à une borne de la pile correspondante.
